# EUROPEAN PATENT APPLICATION

(11) **EP 3 471 042 A1**
(43) Date of publication of application: **17.04.2019**
(21) Application number: 17818842.1
(22) Date of filing: 27.02.2017
(51) Int. Cl.: G06Q 20/40

(54) **MOBILE PAYMENT METHOD, SYSTEM ON CHIP AND TERMINAL**

(30) Priority: 30.06.2016 CN 201610513966
(71) Applicant: Huawei Technologies Co., Ltd., Longgang District Shenzhen, Guangdong 518129 (CN)
(72) Inventor: TAN, Zhufeng, Shenzhen Guangdong 518129 (CN); HU, Cui, Shenzhen Guangdong 518129 (CN); SUN, Shaojie, Shenzhen Guangdong 518129 (CN)
(74) Representative: Maiwald Patent- und Rechtsanwaltsgesellschaft mbH
(86) International application number: PCT/CN2017/075029
(87) International publication number: WO 2018/000843

(57) **Abstract**

This application relates to the field of communications technologies, and discloses a mobile payment method, a system on chip, and a terminal, so as to resolve a problem of a relatively severe security threat that is caused because an external memory is entirely replaced with an earlier-version memory on which authentication may succeed. The method is applied to a system on chip SOC, where the SOC includes a secure element SE integrated into the SOC, and the method includes: receiving, by the SE, a transaction request; obtaining, by the SE, a first check value from an external memory; performing a security check on the external memory according to the first check value and a second check value that is stored locally in the SOC; and if the external memory passes the security check, obtaining, by the SE, first transaction data from the external memory, and processing the transaction request based on the first transaction data. This application is applied to a mobile payment process.

## Description

This application claims priority to Chinese Patent Application 201610513966.4, filed with the Chinese Patent Office on June 30, 2016 and entitled "MOBILE PAYMENT METHOD, SYSTEM ON CHIP, AND TERMINAL", which is incorporated herein by reference in its entirety.

### TECHNICAL FIELD

This application relates to the field of communications technologies, and in particular, to a mobile payment method, a system on chip, and a terminal.

### BACKGROUND

Currently, a near field communication (Near Field Communication, NFC) technology is widely applied to the field of mobile payment. In a process of implementing mobile payment by using the NFC, to ensure security of mobile payment, an independent secure element (Secure Element, SE) chip usually needs to be added to a mobile terminal (Mobile Terminal, MT). The SE chip can store sensitive data during the mobile payment process, and run security encryption and decryption algorithms and the like. However, adding the independent SE chip increases design complexity of a circuit board of the mobile terminal and total costs of the mobile terminal.

To resolve the foregoing problem, the prior art provides an implementation in which an SE chip and a system on chip (System on Chip, SOC) are integrated. However, as limited by a storage process, a non-volatile memory that is in the SE chip and that stores an operating system and a security performance application cannot be integrated into a main chip of the SOC. Therefore, an external memory needs to be added. The external memory includes a common storage area and a replay protected memory block (Replay Protect Memory Block, RPMB). The common storage area is configured to store data having a relatively low security requirement, such as pictures or videos. Authentication and encryption technologies are used in the RPMB, so that the RPMB has relatively high security, and is generally configured to store important data having a relatively high security requirement.

However, the prior art has the following problem: Although data in the RPMB is encrypted and the data is difficult to crack even being stolen, because the external memory configured to store sensitive data is separated from the main chip, an illegal intruder may replace the entire external memory with an earlier-version memory on which authentication may succeed, to tamper data in the external memory. This causes a relatively severe security threat. For example, after a transaction is completed, an intruder may copy or back up the entire external memory. After a next transaction is completed, the external memory is entirely replaced with the copied or backed up memory. In this way, although data in the external memory changes after the next transaction, for example, account balance changes, because actual current balance at this time is replaced with old data in the copied or backed up memory, a great security threat is caused.

### SUMMARY

This application provides a mobile payment method, a system on chip, and a terminal, so as to resolve a relatively severe security threat in the prior art caused because an external memory is entirely replaced with an earlier-version memory on which authentication succeeds.

To achieve the foregoing objective, the following technical solutions are used in this application:
According to a first aspect, this application provides a mobile payment method, applied to a system on chip SOC, where the SOC includes a secure element SE integrated into the SOC, and the method includes: receiving, by the SE, a transaction request; obtaining, by the SE, a first check value from an external memory of the SOC; and performing a security check on the external memory according to the first check value and a second check value that is stored locally in the SOC; and if the external memory passes the security check, obtaining, by the SE, first transaction data from the external memory, and processing the transaction request based on the first transaction data.

In the mobile payment method provided in this application, after receiving a transaction request, an SE separately obtains a check value stored locally and a check value stored in an external memory, performs a security check on the external memory according to the two check values, and processes the transaction request only if the external memory passes the security check. Therefore, compared with the prior art, a check process in which the security check is performed on the external memory is additionally performed in this application, thereby avoiding a security threat caused because the external memory is entirely replaced and data in the external memory is tampered, and improving security of mobile payment.

With reference to the first aspect, in a first implementation of the first aspect, the method further includes: generating, by the SE, second transaction data after processing the transaction request; synchronously updating, by the SE, the first check value and the second check value; and sending, by the SE, an updated first check value and the second transaction data to the external memory, and locally storing an updated second check value in the SOC.

In this implementation, after processing each transaction request, the SE synchronously updates a check value stored locally and a check value stored in the external memory and stores updated check values. In this way, during processing of a next transaction request, a security check on the external memory can be first performed according to check values, and the transaction request is processed only if the security check succeeds. In addition, check values corresponding to different transaction requests are different, thereby improving security of mobile payment.

With reference to the first implementation of the first aspect, in a second implementation of the first aspect, the synchronously updating, by the SE, the first check value and the second check value includes: separately increasing, by the SE, values of the first check value and the second check value by n, to obtain the updated first check value and the updated second check value, where n is a natural number greater than or equal to 1.

This implementation provides a specific implementation of synchronously updating, by the SE, the first check value and the second check value.

With reference to the first implementation of the first aspect, in a third implementation of the first aspect, the synchronously updating, by the SE, the first check value and the second check value includes: separately multiplying, by the SE, values of the first check value and the second check value by k, to obtain the updated first check value and the updated second check value, where k is a natural number greater than or equal to 1.

This implementation provides another specific implementation of synchronously updating, by the SE, the first check value and the second check value.

With reference to the second implementation or the third implementation of the first aspect, in a fourth implementation of the first aspect, the performing a security check on the external memory according to the first check value and a second check value that is stored locally in the SOC includes: comparing, by the SE, the first check value with the second check value; and if the first check value is greater than or equal to the second check value, determining, by the SE, that the external memory passes the security check; or otherwise, determining, by the SE, that the external memory fails to pass the security check.

With reference to the foregoing two specific implementations of updating the first check value and the second check value, this implementation provides a specific implementation of performing, by the SE, a security check on the external memory according to the first check value and a second check value.

With reference to the first implementation of the first aspect, in a fifth implementation of the first aspect, the method further includes: obtaining, by the SE when the SE is powered on, the second check value from a payment platform server and locally storing the second check value in the SOC; and sending, by the SE, the stored updated second check value to the payment platform server when the SE is powered off.

In this implementation, the SE stores, in the payment platform server when the SE is powered off, a check value that is stored locally. Correspondingly, when the SE is powered on next time, the SE obtains the check value from the payment platform server. Because security of the payment platform server is relatively high, security of the check value can be ensured. When the check value is used to perform a security check on the external memory, accuracy of a security check result can be improved.

With reference to the first aspect, in a sixth implementation of the first aspect, the method further includes: if the external memory fails to pass the security check, rejecting, by the SE, the transaction request to terminate a transaction.

In this implementation, if the external memory fails to pass the security check, it indicates that security of the external memory is relatively poor. If the transaction is continued, a relatively severe security threat is caused. Therefore, in this implementation, if the external memory fails to pass the security check, the SE rejects the transaction request to terminate the transaction.

According to a second aspect, this application provides a system on chip, where the system on chip SOC includes a secure element SE integrated into the SOC, and the SE includes a security processor and an internal memory coupled to the security processor, where the security processor is configured to: receive a transaction request and obtain a first check value from an external memory of the SOC; and the security processor is further configured to: perform a security check on the external memory according to the first check value and a second check value that is stored in the memory of the SOC; and if the external memory passes the security check, obtain first transaction data from the external memory, and process the transaction request based on the first transaction data.

In the system on chip provided in this application, the SE is integrated into the system on chip. After receiving a transaction request, the SE separately obtains a check value stored locally and a check value stored in the external memory, performs a security check on the external memory according to the two check values, and processes the transaction request only if the external memory passes the security check. Therefore, compared with the prior art, a check process in which the security check is performed on the external memory is additionally performed in this application, thereby avoiding a security threat caused because the external memory is entirely replaced and data in the external memory is tampered, and improving security of mobile payment.

With reference to the second aspect, in a first implementation of the second aspect, the security processor is further configured to: generate second transaction data after processing the transaction request; synchronously update the first check value and the second check value; and send an updated first check value and the second transaction data to the external memory; and the security processor is further configured to locally store the second check value in the memory of the SOC.

With reference to the first implementation of the second aspect, in a second implementation of the second aspect, the security processor is specifically configured to separately increase values of the first check value and the second check value by n, to obtain the updated first check value and the updated second check value, where n is a natural number greater than or equal to 1.

With reference to the first implementation of the second aspect, in a third implementation of the second aspect, the security processor is specifically configured to separately multiply values of the first check value and the second check value by k, to obtain the updated first check value and the updated second check value, where k is a natural number greater than or equal to 1.

With reference to the second implementation or the third implementation of the second aspect, in a fourth implementation of the second aspect, the security processor is specifically configured to: compare the first check value with the second check value; and when the first check value is greater than or equal to the second check value, determine that the external memory passes the security check; or otherwise, determine that the external memory fails to pass the security check.

With reference to the first implementation of the second aspect, in a fifth implementation of the second aspect, the security processor is further configured to: when the SE is powered on, obtain the second check value from a payment platform server and locally store the second check value in the memory of the SOC; and when the SE is powered off, send the updated second check value that is stored locally in the SOC to the payment platform server.

With reference to the second aspect or the first implementation of the second aspect, in a sixth implementation of the second aspect, the memory of the SOC that is configured to store the second check value is an internal memory located in the SE.

With reference to the second aspect or the first implementation of the second aspect, in a seventh implementation of the second aspect, the security processor is further configured to: if the external memory fails to pass the security check, reject the transaction request to terminate a transaction.

According to a third aspect, this application provides a terminal, including the system on chip SOC according to any one of the second aspect or the implementations of the second aspect, and an external memory coupled to the SOC.

For an interaction process between the SOC and the external memory, refer to the method according to any one of the first aspect or the implementations of the first aspect.

In the terminal provided in this application, after receiving a transaction request, the SE separately obtains a check value stored locally and a check value stored in the external memory, performs a security check on the external memory according to the two check values, and processes the transaction request only if the external memory passes the security check. Therefore, compared with the prior art, a check process in which the security check is performed on the external memory is additionally performed in this application, thereby avoiding a security threat caused because the external memory is entirely replaced and data in the external memory is tampered, and improving security of mobile payment.

### BRIEF DESCRIPTION OF DRAWINGS

FIG. 1 is a schematic flowchart of a first mobile payment method according to an embodiment of this application;
FIG. 2 is a schematic flowchart of a second mobile payment method according to an embodiment of this application;
FIG. 3 is a schematic flowchart of a third mobile payment method according to an embodiment of this application;
FIG. 4 is a schematic flowchart of a fourth mobile payment method according to an embodiment of this application;
FIG. 5 is a schematic flowchart of a fifth mobile payment method according to an embodiment of this application;
FIG. 6 is a schematic structural diagram of a system on chip SOC according to an embodiment of this application; and
FIG. 7 is a schematic structural diagram of a terminal according to an embodiment of this application.

### DESCRIPTION OF EMBODIMENTS

A mobile payment method provided in an embodiment of this application is applied to a system on chip SOC. The SOC includes a secure element SE integrated into the SOC. The SOC is generally applied to a terminal such as a mobile phone or a tablet computer, and is a single chip integrating a microprocessor, an analog Internet Protocol (Internet Protocol, IP) core, a digital IP core, and a memory (or an off-chip storage control interface). Functional modules of the SOC include a processor, a communications module, a graphic and image processing module, a voice processing module, and the like. The SE is further integrated into the SOC in this embodiment of this application. The SE can communicate with the SOC by using an email mechanism or another communications channel. The SE generally includes a dedicated security processor and a memory coupled to the security processor. The SE can store sensitive data used in a mobile payment process, and run security encryption and decryption algorithms and the like, so as to ensure security of the mobile payment process.

The mobile payment method provided in this embodiment of this application further includes an external memory coupled to the SOC. The external memory includes a common storage area and an RPMB area. The common storage area is configured to store data having a relatively low security requirement, such as pictures or videos. Authentication and encryption technologies are used in the RPMB area so that the RPMB area has relatively high security, and is generally configured to store important data having a relatively high security requirement.

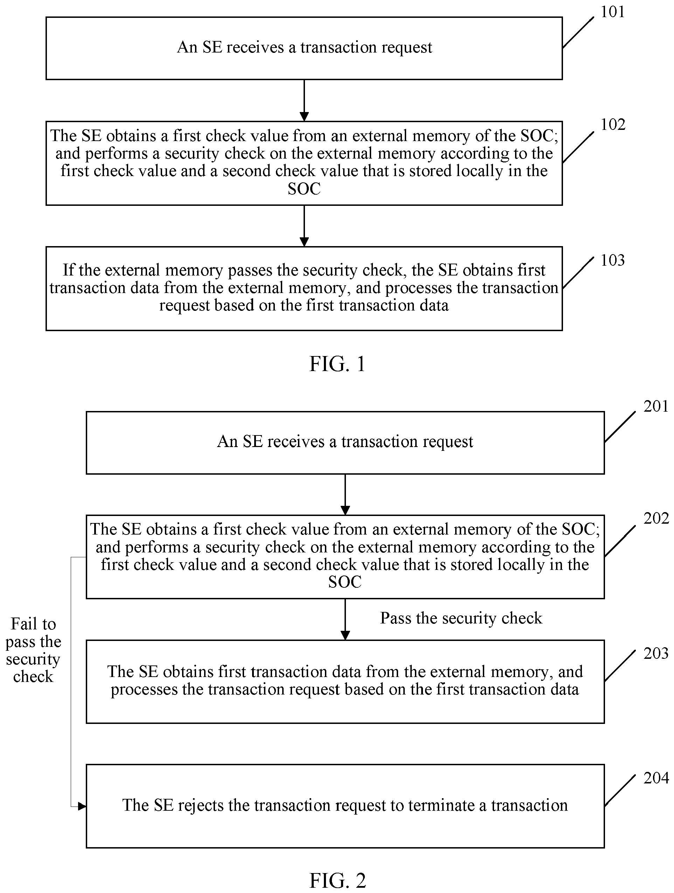

As shown in FIG. 1, an embodiment of this application provides a mobile payment method including the following steps.

101: An SE receives a transaction request.

An initiator of the transaction request may be an NFC module in a terminal or another module configured for mobile payment.

Optionally, the SE may be in a standby state or a power-off state before receiving the transaction request. After receiving the transaction request, the SE is woken up from the standby state or is powered on, and starts to perform the following steps.

102: The SE obtains a first check value from an external memory of the SOC; and performs a security check on the external memory according to the first check value and a second check value that is stored locally in the SOC.

The first check value and the second check value are used to identify a state of a mobile payment. The first check value and the second check value may be synchronously updated after each mobile payment, so that values of check values corresponding to different mobile payments are different.

A memory of the SOC that is configured to locally store the second check value may be a memory in the SOC or the SE.

For different mobile payment applications, different check values may be set. For example, an application (Application, APP) 1 and an APP 2 are different mobile payment applications. When a user performs a mobile payment by using the APP 1, a first check value and a second check value that correspond to the APP 1 are separately obtained to perform a security check. When a user performs a mobile payment by using the APP 2, a first check value and a second check value that correspond to the APP 2 are separately obtained to perform a security check.

Optionally, the first check value and the second check value may be implemented by using a counter. A bit width of the counter may be determined according to an actual requirement, and is not limited in this application. A value of the counter may be changed after each mobile payment to update the check values. When the value of the counter reaches a maximum value, the counter may be reset.

103: If the external memory passes the security check, the SE obtains first transaction data from the external memory, and processes the transaction request based on the first transaction data.

The first transaction data includes sensitive data used in a mobile payment process, such as a payment application account number, a password, and account balance.

If the external memory passes the security check, it indicates that security of the external memory is relatively high and data stored in the external memory is authentic. Therefore, the SE normally processes the transaction request. For a specific processing procedure of normally processing the transaction request, refer to the prior art, and details are not described herein.

In the mobile payment method provided in this embodiment of this application, after receiving a transaction request, an SE separately obtains a check value stored locally and a check value stored in an external memory, performs a security check on the external memory according to the two check values, and processes the transaction request only if the external memory passes the security check. Therefore, compared with the prior art, a check process in which the security check is performed on the external memory is additionally performed in this application, thereby avoiding a security threat caused because the external memory is entirely replaced and data in the external memory is tampered, and improving security of mobile payment.

As shown in FIG. 2, an embodiment of this application further provides a mobile payment method. The method includes the following steps.

201: An SE receives a transaction request.

202: The SE obtains a first check value from an external memory of the SOC; and performs a security check on the external memory according to the first check value and a second check value that is stored locally in the SOC.

If the external memory passes the security check, step 203 is performed. Otherwise, step 204 is performed.

203: The SE obtains first transaction data from the external memory, and processes the transaction request based on the first transaction data.

For specific implementation processes of step 201 to step 203, refer to step 101 to step 103, and details are not described herein again.

204: The SE rejects the transaction request to terminate a transaction.

If the external memory fails to pass the security check, the SE rejects the transaction request to terminate the transaction.

Optionally, the SE may further send alarm information to a processor in the SOC.

In the mobile payment method provided in this embodiment of this application, if a security check on an external memory fails, it indicates that security of the external memory is relatively poor. If a transaction is continued, a relatively severe security threat is caused. Therefore, if the external memory fails to pass the security check, an SE rejects the transaction request to terminate the transaction. Therefore, compared with the prior art, a check process in which the security check is performed on the external memory is additionally performed in this application, thereby avoiding a security threat caused because the external memory is entirely replaced and data in the external memory is tampered, and improving security of mobile payment.

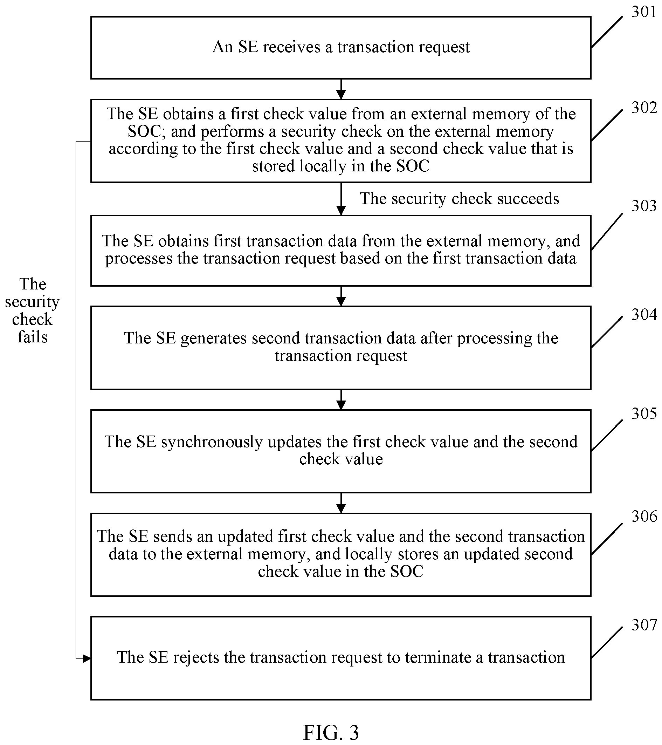

As shown in FIG. 3, based on the method shown in FIG. 2, an embodiment of this application further provides a mobile payment method. The method includes the following steps.

301: An SE receives a transaction request.

302: The SE obtains a first check value from an external memory of the SOC; and performs a security check on the external memory according to the first check value and a second check value that is stored locally in the SOC.

If the external memory passes the security check, step 303 is performed. Otherwise, step 307 is performed.

303: The SE obtains first transaction data from the external memory, and processes the transaction request based on the first transaction data.

For specific implementation processes of step 301 to step 303, refer to step 101 to step 103, and details are not described herein again.

304: The SE generates second transaction data after processing the transaction request.

The second transaction data includes information about an account number whose transaction is completed, such as account balance after the transaction is completed.

305: The SE synchronously updates the first check value and the second check value.

In a first implementation of the step, the SE separately adds n to values of the first check value and the second check value, to obtain the updated first check value and the updated second check value, where n is a natural number greater than or equal to 1.

In a second implementation of the step, the SE separately multiplies values of the first check value and the second check value by k, to obtain the updated first check value and the updated second check value, where k is a natural number greater than or equal to 1.

Correspondingly, corresponding to the first and the second implementations of updating the first check value and the second check value, a specific implementation process of performing a security check in step 102, 202, or 302 includes: comparing, by the SE, the first check value with the second check value; and if the first check value is greater than or equal to the second check value, determining, by the SE, that the external memory passes the security check; or otherwise, determining, by the SE, that the external memory fails to pass the security check.

If the first check value is equal to the second check value, it is obviously that the SE determines that the external memory passes the security check.

In an actual application process, after data generated in a payment process and the first check value are written into the external memory, the SE may be powered off before the second check value is written into the SE. In this case, the first check value is greater than the second check value, but it may be considered that the external memory is still legal, and security of the external memory is still relatively high.

In a third implementation of the step, the SE separately subtracts m from values of the first check value and the second check value, to obtain the updated first check value and the updated second check value, where m is a natural number greater than or equal to 1.

Correspondingly, corresponding to the third implementation of updating the first check value and the second check value, a specific implementation process of performing a security check in step 102, 202, or 302 includes: comparing, by the SE, the first check value with the second check value; and if the first check value is less than or equal to the second check value, determining, by the SE, that the external memory passes the security check; or otherwise, determining, by the SE, that the external memory fails to pass the security check. If the first check value is equal to the second check value, it is obviously that the SE determines that the external memory passes the security check. In an actual application process, after data generated in a payment process and the first check value are written into the external memory, the SE may be powered off before the second check value is written into the SE. In this case, the first check value is less than the second check value, but it may be considered that the external memory is still legal, and security of the external memory is still relatively high.

306: The SE sends an updated first check value and the second transaction data to the external memory, and locally stores an updated second check value in the SOC.

In a specific implementation process of this step, after processing the transaction request, the SE also stores the first check value when storing the second transaction data, and the SE stores the updated second check value.

Corresponding to the third implementation of step 305, in an implementation of the step, the SE compares the first check value with the second check value; and if the first check value is less than or equal to the second check value, the SE determines that the external memory passes the security check; or otherwise, the SE determines that the external memory fails to pass the security check.

307: The SE rejects the transaction request to terminate a transaction.

For a specific implementation process of step 307, refer to step 204, and details are not described herein again.

In the mobile payment method provided in this application, after processing each transaction request, an SE synchronously updates a check value stored locally and a check value stored in the external memory and stores them. In this way, during processing of a next transaction request, a security check on the external memory can be first performed according to check values, and the transaction request is processed only if the security check succeeds. In addition, check values corresponding to different transaction requests are different, thereby improving security of mobile payment.

Optionally, the SE obtains, when the SE is powered on, the second check value from a payment platform server and locally stores the second check value in the SOC.

The SE sends the stored updated second check value to the payment platform server when the SE is powered off.

Generally, security of a server of a payment platform such as a bank or Alipay is relatively high because a technical means such as encryption is used.

In the mobile payment method provided in this application, an SE stores, in a payment platform server when the SE is powered off, a check value that is stored locally. Correspondingly, when the SE is powered on next time, the SE obtains the check value from the payment platform server. Because security of the payment platform server is relatively high, security of the check value can be ensured. When the check value is used to perform a security check on an external memory, accuracy of a security check result can be improved.

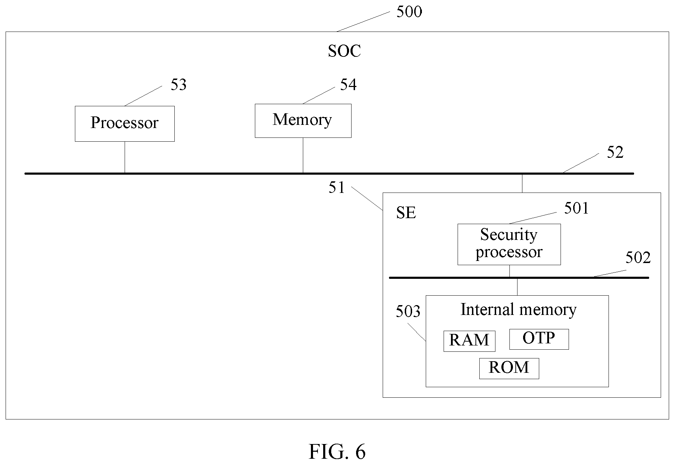

As shown in FIG. 6, an embodiment of this application provides a system on chip SOC. For a specific description of the SOC, refer to details in the following.

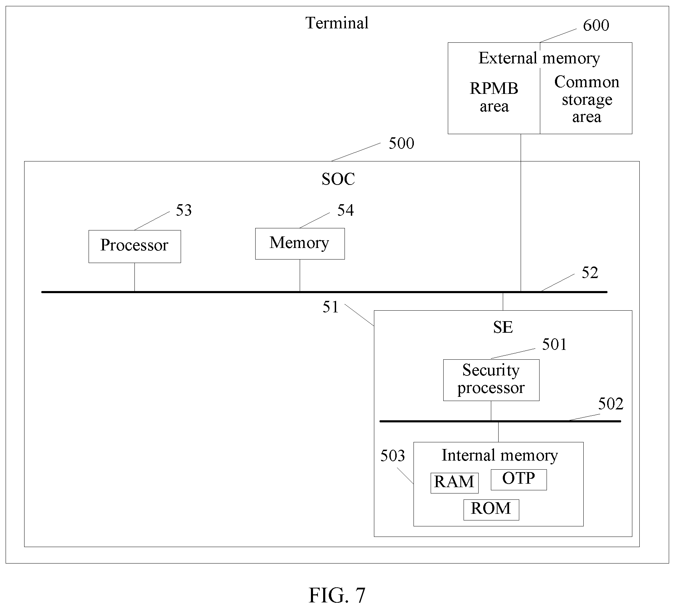

As shown in FIG. 7, an embodiment of this application provides a terminal, including the system on chip SOC shown in FIG. 6 or an external memory coupled to the SOC. For a specific description of the terminal, refer to details in the following.

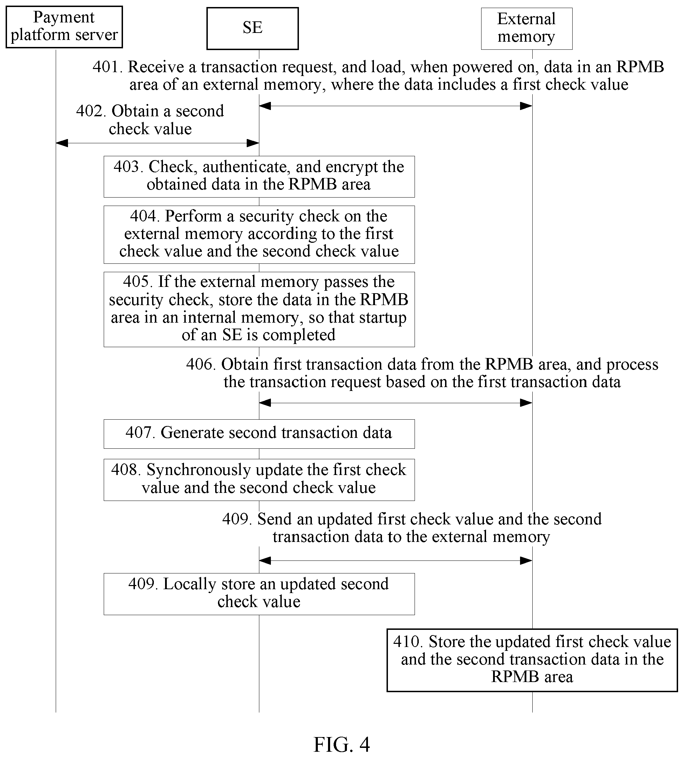

As shown in FIG. 4, to describe the method provided in any embodiment of FIG. 1 to FIG. 3 in the embodiments of this application more clearly, with reference to the terminal shown in FIG. 7 and an actual application scenario, an embodiment of this application further provides a mobile payment method, including the following steps.

401: An SE receives a transaction request, and executes, when powered on, a program stored in a ROM to load data in an RPMB area of an external memory.

The data in the RPMB area in this step includes an operating system for mobile payment, application software for mobile payment, a first check value, and the like. For a specific implementation process of this step, refer to the prior art, and details are not described in this embodiment of this application.

402: The SE obtains a second check value from a payment platform server.

Optionally, the SE stores, in a local memory of an SOC, for example, a volatile memory in the SOC, such as a RAM, the second check value obtained from the payment platform server. This is equivalent to a temporary storage process.

403: The SE checks, authenticates, and decrypts the obtained data in the RPMB area.

Because authentication and encryption technologies are used in the RPMB area, the SE needs to perform an operation, such as decryption, on the obtained data in the RPMB area. For a specific implementation process of this step, refer to the prior art, and details are not described in this embodiment of this application.

404: The SE performs a security check on the external memory according to a first check value obtained from the RPMB area and the second check value obtained from the payment platform server.

For a specific implementation process of this step, refer to the previous description, and details are not described in this embodiment of this application again.

405: If the external memory passes the security check, the SE stores the data in the RPMB area in an internal memory, so that startup of the SE is completed, and the SE may perform a normal operation and transaction.

406: The SE obtains first transaction data from the RPMB area, and processes the transaction request based on the first transaction data.

407: The SE generates second transaction data after processing the transaction request.

408: The SE synchronously updates the first check value and the second check value.

409: The SE sends an updated first check value and the second transaction data to the external memory, and locally stores an updated second check value.

410: The external memory stores the updated first check value and the second transaction data in the RPMB area.

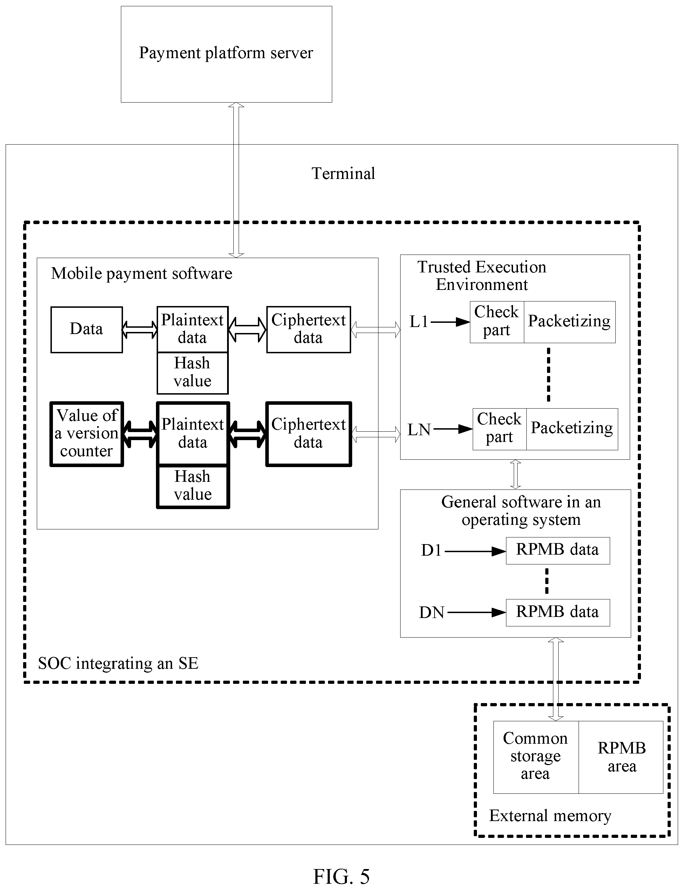

As shown in FIG. 5, a specific implementation process of performing step 406 to step 409 shown in FIG. 4 specifically includes: The SE loads mobile payment application software. When data in a transaction process needs to be stored in the external memory, the mobile payment application software obtains ciphertext data after encrypting the data during the transaction. As shown in a bold part in FIG. 5, not only the data during the transaction is encrypted to obtain the ciphertext data, but also the first check value needs to be encrypted to obtain ciphertext data. Then the data is packetized in a Trusted Execution Environment provided by the terminal. The packetized data is encapsulated into data in an RPMB format according to a requirement of the RPMB protocol by using general software in an operating system, that is, an operating system used by the terminal, for example, software in an Android operating system, and the encapsulated data is written into the RPMB area of the external memory. In addition, the SE further stores the second check value in the local memory of the SOC and stores the second check value in the payment platform server before the SE is powered off.

It should be noted that a specific implementation of storing, by the SE, data in the payment platform server includes a process, such as establishing, by the SE, a channel to the payment platform server, encapsulating the data into data in a particular format, and storing the encapsulated data in a mobile platform server. For the process, refer to the prior art, and details are not described in this embodiment of this application.

It should be further noted that storing the second check value in the internal memory of the SE is a temporary storage process. Therefore, the internal memory of the SE may be a volatile memory, such as a RAM or a static random access memory (Static Random Access Memory, SRAM). When the transaction is completed and the SE needs to be powered off to reduce power consumption. The SE needs to connect to a network and uploads the updated second check value that is stored in the SE to the payment platform server. Then the SE enters a powered-off state, and information stored in the internal memory of the SE is automatically cleared.

As shown in FIG. 6, an embodiment of this application provides a system on chip SOC 500, which is configured to perform the method according to any embodiment of FIG. 1 to FIG. 5. The system on chip SOC includes a secure element SE 51 integrated into the SOC, a first bus 52, a processor 53, and a memory 54.

The memory 54 is located in the SOC but is not located in the SE, and may be a non-volatile read-only memory (Read-Only Memory, ROM), a volatile random access memory (Random Access Memory, RAM), or an electrically erasable programmable read-only memory (Electrically Erasable Programmable Read-Only Memory, EEPROM).

The SE includes a security processor 501, a second bus 502, and an internal memory 503 that is coupled to the security processor 501 by using the second bus 502. The internal memory 503 specifically includes a ROM, a RAM, a static random access memory (Static Random Access Memory, SRAM), a one time programmable (One Time Programmable, OTP) memory, and the like.

A communications channel is further configured in the SOC. The SE and another module in the SOC communicate with each other by using the communications channel. The SOC is coupled to an external memory by using the first bus 52. The SE communicates with the external memory by using the communications channel and the first bus.

It should be noted that, the system on chip 500 further includes a communications module, a graphic and image processing module, a voice processing module, and the like, not shown in FIG. 6.

It should be further noted that, the SE further includes a module such as a true random number generator (True Random Number Generator, TRNG) or encryption and decryption modules, not shown in FIG. 6.

The security processor 501 is configured to: receive a transaction request and obtain a first check value from the external memory of the SOC.

The security processor 501 is further configured to: perform a security check on the external memory according to the first check value and a second check value that is stored in the memory of the SOC; and if the external memory passes the security check, obtain first transaction data from the external memory, and process the transaction request based on the first transaction data.

Further, the security processor 501 is further configured to: generate second transaction data after processing the transaction request; synchronously update the first check value and the second check value; and send an updated first check value and the second transaction data to the external memory; and the security processor is further configured to locally store the second check value in the memory of the SOC.

Optionally, the security processor 501 is specifically configured to separately increase values of the first check value and the second check value by n, to obtain the updated first check value and the updated second check value, where n is a natural number greater than or equal to 1.

Optionally, the security processor 501 is specifically configured to separately multiply values of the first check value and the second check value by k, to obtain the updated first check value and the updated second check value, where k is a natural number greater than or equal to 1.

Optionally, the security processor 501 is specifically configured to: compare the first check value with the second check value; and when the first check value is greater than or equal to the second check value, determine that the external memory passes the security check; or otherwise, determine that the external memory fails to pass the security check.

Further, the security processor 501 is further configured to: when the SE is powered on, obtain the second check value from a payment platform server and locally store the second check value in the memory of the SOC; and when the SE is powered off, send the updated second check value that is stored locally in the SOC to the payment platform server.

Optionally, the memory of the SOC that is configured to store the second check value is the internal memory located in the SE, for example, the RAM or the OTP in the SE, or is another memory located in the SOC.

Specifically, because each bit unit of the OTP represents one value, and each bit unit is a one time programmable component, the second check value may be changed by programming a bit unit. For example, programming one more bit unit means that a value of the second check value is increased by 1.

Further, the security processor is further configured to: if the external memory fails to pass the security check, reject the transaction request to terminate a transaction.

In the system on chip provided in this embodiment of this application, the SE is integrated into the system on chip. After receiving a transaction request, the SE separately obtains a check value stored locally and a check value stored in the external memory, performs a security check on the external memory according to the two check values, and processes the transaction request only if the external memory passes the security check. Therefore, compared with the prior art, a check process in which the security check is performed on the external memory is additionally performed in this application, thereby avoiding a security threat caused because the external memory is entirely replaced and data in the external memory is tampered, and improving security of mobile payment.

It should be noted that all processors (including the processor 53 and the security processor 501) in this embodiment of this application may be one processor, or may be a general term of multiple processing elements. For example, the processor may be a central processing unit (Central Processing Unit, CPU for short), or may be an application-specific integrated circuit (Application Specific Integrated Circuit, ASIC for short), or may be one or more integrated circuits configured to implement this embodiment of the this application, for example, one or more microprocessors (digital signal processor, DSP for short), or one or more field programmable gate arrays (Field Programmable Gate Array, FPGA for short).

The memory in this embodiment of this application (the memory 54) may be a storage apparatus or may be a general term of multiple storage elements, and is configured to store executable program code and the like. The memory may include a random access memory (RAM) or may include a non-volatile memory (non-volatile memory), such as a magnetic disk storage or a flash (Flash).

The bus (including the first bus 52 and the second bus 502) may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified as an address bus, a data bus, a control bus, and the like. For convenience of representation, only one line is used for representation in the figure, but it does not indicate that there is only one bus or one type of bus.

As shown in FIG. 7, an embodiment of this application provides a terminal, including: the system on chip SOC 500 described in FIG. 6, and an external memory 600 coupled to the SOC.

The external memory 600 includes a common storage area and an RPMB area. The common storage area is configured to store data having a relatively low security requirement, such as pictures or videos. Authentication and encryption technologies are used in the RPMB area so that the RPMB area has relatively high security, and is generally configured to store important data having a relatively high security requirement.

Optionally, the terminal provided in this embodiment of this application further includes an NFC module.

For a specific interaction process between the SOC 500 and the external memory 600, refer to the method according to any embodiment of FIG. 1 to FIG. 5.

In the terminal provided in this embodiment of this application, after receiving a transaction request, the SE separately obtains a check value stored locally and a check value stored in the external memory, performs a security check on the external memory according to the two check values, and processes the transaction request only if the external memory passes the security check. Therefore, compared with the prior art, a check process in which the security check is performed on the external memory is additionally performed in this application, thereby avoiding a security threat caused because the external memory is entirely replaced and data in the external memory is tampered, and improving security of mobile payment.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part contributing to the prior art may be implemented in a form of a software product. The computer software product is stored in a readable storage medium, such as a floppy disk, a hard disk, or an optical disc of a computer, and includes several instructions for instructing a computer device (which may be a personal computer, a server, or a network device) to perform the methods described in the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A mobile payment method, applied to a system on chip SOC, wherein the SOC comprises a secure element SE integrated into the SOC, and the method comprises:
receiving, by the SE, a transaction request;
obtaining, by the SE, a first check value from an external memory of the SOC; and performing a security check on the external memory according to the first check value and a second check value that is stored locally in the SOC; and
if the external memory passes the security check, obtaining, by the SE, first transaction data from the external memory, and processing the transaction request based on the first transaction data.

2. The method according to claim 1, wherein the method further comprises:
generating, by the SE, second transaction data after processing the transaction request;
synchronously updating, by the SE, the first check value and the second check value; and
sending, by the SE, an updated first check value and the second transaction data to the external memory, and locally storing an updated second check value in the SOC.

3. The method according to claim 2, wherein the synchronously updating, by the SE, the first check value and the second check value comprises:
separately increasing, by the SE, values of the first check value and the second check value by n, to obtain the updated first check value and the updated second check value, wherein n is a natural number greater than or equal to 1.

4. The method according to claim 2, wherein the synchronously updating, by the SE, the first check value and the second check value comprises:
separately multiplying, by the SE, values of the first check value and the second check value by k, to obtain the updated first check value and the updated second check value, wherein k is a natural number greater than or equal to 1.

5. The method according to claim 3 or 4, wherein the performing a security check on the external memory according to the first check value and a second check value that is stored locally in the SOC comprises:
comparing, by the SE, the first check value with the second check value; and
if the first check value is greater than or equal to the second check value, determining, by the SE, that the external memory passes the security check; or otherwise, determining, by the SE, that the external memory fails to pass the security check.

6. The method according to claim 2, wherein the method further comprises:
obtaining, by the SE when the SE is powered on, the second check value from a payment platform server and locally storing the second check value in the SOC; and
sending, by the SE, the stored updated second check value to the payment platform server when the SE is powered off.

7. The method according to claim 1, wherein the method further comprises:
if the external memory fails to pass the security check, rejecting, by the SE, the transaction request to terminate a transaction.

8. A system on chip, wherein the system on chip SOC comprises a secure element SE integrated into the SOC, and the SE comprises a security processor and an internal memory coupled to the security processor, wherein
the security processor is configured to: receive a transaction request and obtain a first check value from an external memory of the SOC; and
the security processor is further configured to: perform a security check on the external memory according to the first check value and a second check value that is stored in the memory of the SOC; and if the external memory passes the security check, obtain first transaction data from the external memory, and process the transaction request based on the first transaction data.

9. The system on chip according to claim 8, wherein
the security processor is further configured to: generate second transaction data after processing the transaction request; synchronously update the first check value and the second check value; and send an updated first check value and the second transaction data to the external memory; and
the security processor is further configured to locally store the second check value in the memory of the SOC.

10. The system on chip according to claim 9, wherein
the security processor is specifically configured to separately increase values of the first check value and the second check value by n, to obtain the updated first check value and the updated second check value, wherein n is a natural number greater than or equal to 1.

11. The system on chip according to claim 9, wherein
the security processor is specifically configured to separately multiply values of the first check value and the second check value by k, to obtain the updated first check value and the updated second check value, wherein k is a natural number greater than or equal to 1.

12. The system on chip according to claim 10 or 11, wherein
the security processor is specifically configured to: compare the first check value with the second check value; and when the first check value is greater than or equal to the second check value, determine that the external memory passes the security check; or otherwise, determine that the external memory fails to pass the security check.

13. The system on chip according to claim 9, wherein
the security processor is further configured to: when the SE is powered on, obtain the second check value from a payment platform server and locally store the second check value in the memory of the SOC; and when the SE is powered off, send the updated second check value that is stored locally in the SOC to the payment platform server.

14. The system on chip according to claim 8 or 9, wherein the memory of the SOC that is configured to store the second check value is an internal memory located in the SE.

15. The system on chip according to claim 8 or 9, wherein
the security processor is further configured to: if the external memory fails to pass the security check, reject the transaction request to terminate a transaction.

16. A terminal, comprising: the system on chip SOC according to any one of claims 8 to 15 and an external memory coupled to the SOC.
